# EUROPÄISCHE PATENTANMELDUNG

(11) **EP 4 660 060 A1**
(43) Veröffentlichungstag der Anmeldung: **10.12.2025**
(21) Anmeldenummer: 24179662.2
(22) Anmeldetag: 03.06.2024
(51) Int. Cl.: B62D 31/02, B61D 17/18, B62D 29/04, B62D 33/04

(54) **BUS ZUR BEFÖRDERUNG VON PASSAGIEREN**

(71) Anmelder: Carrosserie Hess AG, 4512 Bellach (CH)
(72) Erfinder: NAEF, Alex, 4512 Bellach (CH); WUNDERLICH, Jan, 4710 Balsthal (CH)
(74) Vertreter: Keller Schneider Patent- und Markenanwälte AG

(57) **Zusammenfassung**

Ein Bus zur Beförderung von Passagieren umfasst einen Aufbau (1), der einen Fahrgastraum umgibt, wobei der Aufbau (1) eine metallische Fachwerkstruktur (2) und daran befestigte Flächenelemente umfasst und wobei der Fahrgastraum von einem Aussenraum durch ein an der metallischen Fachwerkstruktur (2) angeordnetes Dämmsystem thermisch isoliert ist. Das Dämmsystem umfasst an der metallischen Fachwerkstruktur gelagerte mehrfachverglaste Seitenfenster (10.2, 10.3, 10.4, 10.5, 10.6) als erste Flächenelemente und an der metallischen Fachwerkstruktur gelagerte zweite Flächenelemente (21), die zumindest auf einer Hauptfläche mit einer ersten Isolationsschicht aus einem melaminbasierten Schaumstoffmaterial und mit einer zweiten Isolationsschicht aus einem Aerogelmaterial versehen sind. Durch diese Kombination von Flächenelementen (10.2, 10.3, 10.4, 10.5, 10.6, 21) lässt sich ein gutes Verhältnis zwischen Dämmeigenschaften, Gewicht und Kosten erreichen.

## Beschreibung

### Technisches Gebiet

Die Erfindung betrifft einen Bus zur Beförderung von Passagieren, umfassend einen Aufbau, der einen Fahrgastraum umgibt, wobei der Aufbau eine metallische Fachwerkstruktur und daran befestigte Flächenelemente umfasst und wobei der Fahrgastraum von einem Aussenraum durch ein an der metallischen Fachwerkstruktur angeordnetes Dämmsystem thermisch isoliert ist

### Stand der Technik

Busse verschiedener Typen werden zur Beförderung von Passagieren eingesetzt, zum einen als so genannte Reisebusse, die ausschliesslich für die Beförderung sitzender Fahrgäste gebaut sind und oft im Fernverkehr eingesetzt werden, insbesondere im Charterbetrieb. Zum anderen werden verschiedene Arten von Bussen im öffentlichen Personenverkehr eingesetzt, so z. B. Autobusse oder Oberleitungsbusse (auch Trolleybusse genannt). Vorliegend werden Fahrzeuge generell als Busse bezeichnet, wenn sie primär der Beförderung von Passagieren dienen, mehr als 9 Personen transportieren können und eine Länge von mehr als 5 m aufweisen. Busse umfassen insbesondere sogenannte Midibusse mit einer Länge von ca. 8-11 m, Solobusse bzw. Reisebusse mit einer Länge von ca. 10-15 m, Gelenkbusse mit einer Länge von ca. 16.5-20 m und Doppelgelenkbusse mit einer Länge von bis zu 25 m.

Busse werden herkömmlich oft durch Dieselmotoren angetrieben. In den letzten Jahren hat nach gasbetriebenen Bussen insbesondere die Verbreitung von Hybridbussen und reinen Elektrobussen zugenommen. Solche Busse führen eine Batterie oder mehrere Batterien zur Energiespeicherung mit.

Durch die Elektrifizierung des Antriebs fällt die normalerweise frei zur Verfügung stehende Abwärme des Verbrennungsmotors weg. Es muss also grundsätzlich elektrisch geheizt werden, was die Reichweite von Elektrobussen in heizintensiven Perioden deutlich reduzieren kann. Da bei kalter Witterung auch die nutzbare Kapazität der Batterie geringer ist, muss letztere grösser dimensioniert werden, was insgesamt zu einem höheren Energiebedarf führt, oder es muss zur Unterstützung z. B. eine Dieselheizung eingesetzt werden, was insbesondere aufgrund der damit verbundenen Emissionen unerwünscht ist.

Es sind verschiedene Ansätze zur Reduktion der benötigten Energie zum Beheizen des Fahrgastraums bekannt, so z. B. der Einsatz von Wärmepumpen, die Nutzung von Infrarotheizungen, bedarfsoptimierte Heizungssteuerungen usw.

Ein wichtiger Ansatz ist jedoch auch eine Verbesserung der Wärmedämmung des Fahrgastraums, so dass weniger Wärme an die Umgebung abgegeben wird. Bei herkömmlichen Bussen wurde die Wärmedämmung oft als Nebenthema betrachtet, da aufgrund des Dieselmotors ohnehin genügend Abwärme für das Beheizen des Fahrgastraums verfügbar war. Hauptfokus bei der Gestaltung des Aufbaus war bisher die Gewichtsreduktion. Die Aufbauten waren aus Aluminium, Kunststoff, Stahl oder auch teilweise Verbundmaterialien. Die verbauten Materialien haben einen Wärmedurchgangskoeffizienten im Bereich von ca. 200 W/m² K (Aluminium) bis ca. 0.2 W/m² K. Moderne verfügbare Dämmmaterialien weisen hingegen deutlich geringere Wärmedurchgangskoeffizienten in Bereichen von 0.025 bis 0.05 W/m² K auf.

Dennoch kann nicht einfach die Dämmung maximiert werden, da dies zum einen zu höheren Kosten und zu einem höheren Gewicht (und damit einem erhöhten Energiebedarf für den Antrieb) führt und da dies zum anderen das Volumen des nutzbaren Innenraums reduzieren kann.

### Darstellung der Erfindung

Aufgabe der Erfindung ist es entsprechend, einen dem eingangs genannten technischen Gebiet zugehörenden Bus zur Beförderung von Passagieren zu schaffen, der eine verbesserte Wärmedämmung aufweist und gleichzeitig wirtschaftlich und energiesparend ist.

Die Lösung der Aufgabe ist durch die Merkmale des Anspruchs 1 definiert. Gemäss der Erfindung umfasst das Dämmsystem
a) an der metallischen Fachwerkstruktur gelagerte mehrfachverglaste Seitenfenster als erste Flächenelemente; und
b) an der metallischen Fachwerkstruktur gelagerte zweite Flächenelemente, die zumindest auf einer Hauptfläche mit einer ersten Isolationsschicht aus einem
melaminbasierten Schaumstoffmaterial und mit einer zweiten Isolationsschicht aus einem Aerogelmaterial versehen sind.

Die Seitenfenster weisen somit zwei oder mehr Gläser auf, wobei eine Doppelverglasung aufgrund des Verhältnisses von Gewicht und Dämmeigenschaften bevorzugt ist.

Beim Aerogelmaterial handelt es sich um einen hochporösen Festkörper, dessen Volumen in der Regel zu über 90% aus luftgefüllten Poren gebildet ist, oft beträgt der Luftanteil am Gesamtvolumen 98% oder mehr. Insbesondere Aerogele auf Silicatbasis sind kommerziell verfügbar und im Rahmen der vorliegenden Erfindung einsetzbar.

Die Lösung eignet sich für Busse mit einer metallischen Fachwerkstruktur und daran befestigten Flächenelementen, z. B. für Busse, die auf dem System CO-BOLT^{®} der Anmelderin basieren. Dieses System umfasst stranggepresste Aluminium-Profile mit C-förmigen Kanälen, welche mittels entsprechender Eckstücke und Klemmplatten mittels Verschraubungen verbunden werden. Der selbsttragende Aufbau besteht aus zwei grossen Hauptprofilen, einem Dachrahmenprofil und einem Seitenwandprofil, die durch eine Reihe kleinerer Profile verbunden sind. Der obere Teil des Aufbaus wird vollständig durch diese Profile gebildet und benötigt keine weitere Beplankung. Einfache Seitenklappen, welche bei Beschädigung rasch ersetzt werden können, decken die ganze Länge des unteren Teils des Aufbaus ab. Front und Heck werden aus glasfaserverstärkten Polyesterformteilen oder Formteilen aus anderem geeigneten Kunststoff gebildet. Die Erfindung ist aber auch bei anderen Fachwerkaufbauten, z. B. auf der Basis von verschweissten Stahlprofilen oder Profilen aus Verbundwerkstoffen, einsetzbar.

Die Erfindung lässt sich bei allen erwähnten Bustypen, also insbesondere für Midibusse, Solobusse, Gelenk- und Doppelgelenkbusse einsetzen, sowohl für den Reisebetrieb als auch für den Betrieb im öffentlichen Verkehr. Die Erfindung lässt sich auch auf Buszüge, also Solobusse mit Personenanhänger, anwenden, wobei sowohl der Aufbau des Zugfahrzeugs als auch derjenige des Anhängers erfindungsgemäss ausgebildet sein kann. Entsprechend wird auch ein Personenanhänger als «Bus» im Sinn der vorliegenden Unterlagen verstanden.

Durch die erfindungsgemässe Kombination von mehrfachverglasten Fenstern als erste Flächenelemente mit zweiten Flächenelementen, die durch eine Melaminschaumschicht und eine Aerogelschicht gedämmt sind, lässt sich ein gutes Verhältnis zwischen Dämmeigenschaften, Gewicht und Kosten erreichen. Die Kombination ist insbesondere zur Dämmung von Bussen, insbesondere elektrisch angetriebenen Bussen, geeignet und ermöglicht Energieeinsparungen, insbesondere bei kalter Witterung. Da sich umgekehrt, bei heisser Witterung, aufgrund der Dämmung der Fahrgastraum weniger aufheizt, kann die Kühlleistung reduziert werden, so dass sich auch dann ein energieeffizienter Betrieb ergibt.

Bevorzugt weist die erste Isolationsschicht eine erste Dicke von 20-50 mm auf, und die zweite Isolationsschicht weist eine zweite Dicke von 5-20 mm auf. Dabei ist insbesondere die erste Dicke mindestens doppelt so gross ist wie die zweite Dicke. Durch eine solche Kombination der Dicken der Melaminschaumschicht und der Aerogelschicht ergibt sich ein gutes Verhältnis zwischen Dämmeigenschaften, Volumen und Kosten. Besonders bevorzugt beträgt die erste Dicke 30-40 mm, und die zweite Dicke beträgt 8-15 mm. Die Reihenfolge der Schichten, ausgehend vom Flächenelement, kann unterschiedlich gewählt werden. Es können zudem weitere Schichten vorhanden sein, z. B. Dampfsperren, Klebeschichten oder Abdeckungen.

Bevorzugt weisen die Seitenfenster eine Edelgasfüllung auf und sind mit einer low-E-Beschichtung versehen. Beide Massnahmen verbessern die thermischen Eigenschaften sowohl bei Kühl- als auch bei Heizbetrieb, ohne das Gesamtgewicht merklich zu erhöhen. Edelgasfüllungen und low-E-Beschichtungen sind insbesondere aus dem Objektbereich bekannt und können auch bei den Seitenfenstern des erfindungsgemässen Busses in analoger Weise umgesetzt werden.

Bevorzugt sind mindestens 20% einer äusseren Oberfläche des Aufbaus mit einer Verglasung versehen. Die äussere Oberfläche umfasst dabei sowohl die Seiten, Front- und Heckflächen als auch den Boden und das Dach. Die Verglasung schliesst dabei nebst den erfindungsgemässen Seitenfenstern auch die Windschutzscheibe und rückseitige Fenster ein. Bevorzugt werden mindestens 80% der Verglasung durch die erfindungsgemässen Seitenfenster gebildet. Aufgrund von deren guter Wärmedämmung ergeben sich dadurch vorteilhafte Dämmeigenschaften des Aufbaus.

Bei bevorzugten Ausführungsformen des erfindungsgemässen Busses umfassen die Seitenfenster eine äussere Scheibe und mindestens eine mit der äusseren Scheibe mechanisch und dichtend verbundene innere Scheibe, wobei eine Fläche der äusseren Scheibe grösser ist als eine Fläche der inneren Scheibe. Insbesondere ist die Fläche der äusseren Scheibe um mindestens 5% grösser als diejenige der inneren Scheibe. Es lassen sich damit besonders vorteilhafte Dämmeigenschaften auf den Fahrzeugseiten erreichen. Eine solche Geometrie kann auch Vorteile bei der Nachrüstung (Retrofit) bestehender Busse haben.

Insbesondere erstreckt sich in einem unteren Bereich der Seitenfenster die äussere Scheibe über die mindestens eine innere Scheibe nach unten, und eine Innenseite der äusseren Scheibe ist mit einer Aussenfläche eines sich im Wesentlichen horizontal erstreckenden Mittelgurts der metallischen Fachwerkstruktur verklebt. Besonders bevorzugt erstreckt sich die äussere Scheibe in vertikaler Richtung ganz über die vertikale Erstreckung des Mittelgurts. Der Mittelgurt aus dem Metall der Fachwerkstruktur ist somit nach aussen bereits durch die äussere Scheibe abgedeckt, und es wird in diesem Bereich keine zusätzliche Abdeckung benötigt. Die Anordnung lässt sich zudem so schon auf der Aussenseite des Mittelgurts gut dämmen. Da der untere Bereich der äusseren Scheibe als Abdeckung dient und insbesondere nicht transparent oder auch nur lichtdurchlässig sein muss, kann er eingefärbt oder mit einer opaken Beschichtung versehen sein.

Mit Vorteil ist zudem eine dem Fahrgastraum zugewandte Innenseite des Mittelgurts mit einer Schicht aus einem Aerogelmaterial versehen, und ein Verkleidungsprofil ist am Mittelgurt mechanisch befestigt, so dass das Verkleidungsprofil die Schicht teilweise übergreift und auf einer Aussenseite flächig an die innere Scheibe mindestens eines der Seitenfenster anstösst, d. h. sich mit einem äusseren Abschnitt parallel zur inneren Scheibe erstreckt, was z. B. die Herstellung einer Fuge zwischen dem Verkleidungsprofil und dem Seitenfenster ermöglicht . Dies stellt eine gute thermische Isolation an der Innenseite des Mittelgurts und am Übergang zu den Seitenfenstern sicher.

Mit Vorteil ist an der metallischen Fachwerkstruktur zumindest bereichsweise auf einer dem Fahrgastraum zugewandten Seite und/oder auf einer einer durch die Fachwerkstruktur gebildeten Öffnung zugewandten Seite eine Schicht eines Isolationsmaterials, insbesondere eines Kautschukmaterials, angeordnet. Dadurch wird verhindert, dass die metallischne Elemente der Fachwerkstruktur Kältebrücken bilden. Beim Isolationsmaterial handelt es sich insbesondere um ein synthetisches Kautschukmaterial in einem geschlossenzelligen Materialstreifen. Dieses wird bevorzugt direkt auf die entsprechende Oberfläche des Strukturelements aufgeklebt. Die Schichtdicke des Isolationsmaterials beträgt insbesondere 2-5 mm. Eine Anordnung auf der der Öffnung zugewandten Seite ist insbesondere dann sinnvoll, wenn die Öffnung mit einem zweiten Flächenelement ausgekleidet ist. Nebst dem Isolationsmaterial können weitere Schichten vorhanden sein, z. B. eine Klebeschicht, eine Dampfbremse o. ä.

Bevorzugt umfasst der Aufbau einen Boden, der eine Grundplatte aus einem Verbundprodukt aus vernetztem Polymerschaum und Glasfasern sowie einen innenseitig aufgebrachten Bodenbelag umfasst.

Der vernetzte Polymerschaum der Grundplatte basiert insbesondere auf Polyurethan und ist geschlossenzellig. Die Dicke der Grundplatte beträgt bevorzugt 12-25 mm.

Der Bodenbelag umfasst insbesondere in an sich bekannter Weise eine Tragschicht, darüber angeordnete Dekor- und Nutzschichten sowie einen dahinter angeordneten Gegenzug und eine Rückseite, z. B. aus einem textilen Material. Die Tragschicht wird z. B. durch ein Glasfasergeflecht gebildet.

Bevorzugt weist der Bodenbelag auf der Rückseite der Tragschicht eine geschäumte Schicht zur weiteren Verbesserung der Wärmedämmung auf.

Der beschriebene Aufbau des Bodens ermöglicht eine gute Wärmedämmung im Bodenbereich bei gleichzeitig hoher mechanischer Belastbarkeit.

Mit Vorteil umfasst der Aufbau ein Dach, das in Öffnungen der metallischen Fachwerkstruktur zweite Flächenelemente aufweist. Diese ermöglichen eine flache Bauweise des Dachs. Nach aussen wird die Fachwerkstruktur im Dachbereich insbesondere durch eine Dachhaut, z. B. aus einem Glasfaser-Verbundwerkstoff, abgedeckt, während sie auf der Innenseite durch eine Verkleidung bedeckt ist. Mit Vorteil ist die Fachwerkstruktur auf den den Öffnungen zugewandten Seiten mit der oben erwähnten Kautschukschicht versehen, um Kältebrücken zu unterbrechen.

Bevorzugt weist der Aufbau im Bereich von Radkästen eine Schicht aus einem Aerogelmaterial auf. Die Schicht hat beispielsweise eine Dicke von 5-15 mm. In der Regel genügt eine bereichsweise Anbringung, um den Wärmeverlust in diesem Bereich substanziell zu reduzieren.

Bevorzugt ist im Bereich der Radkästen die Schicht aus dem Aerogelmaterial auf einer dem Fahrgastraum abgewandten Aussenseite des Aufbaus angeordnet, und eine mechanische Schutzschicht ist aussen auf der Isolationsschicht angeordnet. Die mechanische Schutzschicht wird z. B. durch eine Verkleidung, z. B. eine Platte aus einem robusten Kunststoff- oder Verbundmaterial oder aus Edelstahl, gebildet.

Mit Vorteil ist mindestens eine Tür des Busses mit einer Vorrichtung zur Erzeugung eines Luftschleiers versehen. Besonders bevorzugt sind alle Türen zur Benutzung durch die Fahrgäste mit einer solchen Vorrichtung versehen. Eine solche Vorrichtung umfasst einen Luftauslass zur Abgabe von (gegebenenfalls temperierter) Luft, der insbesondere oberhalb der Tür angeordnet ist. Sie umfasst weiter vorzugsweise einen Lufteinlass auf der gegenüberliegenden Seite der Tür (also insbesondere unten). Der Luftauslass und gegebenenfalls der Lufteinlass sind mit einem Gebläse zur Förderung der für den Luftschleier benötigten Luft verbunden. Der Luftschleier reduziert bei kalter Witterung den Wärmeverlust bei geöffneter Tür. Bei warmen Aussentemperaturen kann er zur Verringerung der Wärmeübertragung aus dem Aussen- in den Innenraum eingesetzt werden.

Bei bevorzugten Ausführungsformen umfasst der Bus einen elektrischen Antrieb und eine Antriebsbatterie, wobei ein Ladeanschluss zum Aufladen der Antriebsbatterie im Bereich der Seitenfenster derart angeordnet ist, dass er durch einen Ausschnitt in einem der Seitenfenster von aussen zugänglich ist. Dieser Aufbau ermöglicht eine ästhetische und praktische Lösung bei optimaler Integration in das thermische Isolationskonzept.

Der Ausschnitt ist insbesondere in demjenigen Bereich angeordnet, in den sich nur die äussere Scheibe des entsprechenden Seitenfensters erstreckt. Die thermische Dämmung wird insbesondere dadurch erreicht, dass für die Ladesteckdose, die den Ladeanschluss ausbildet, ein Aufnahmeraum vorgesehen ist und dass dieser Aufnahmeraum gegenüber dem Fahrgastraum abgeschlossen ist, die Scheibenisolation wird in ihrer Funktion somit nur minimal verändert.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1A, B: zwei Schrägbilder der metallischen Fachwerkstruktur des Aufbaus eines erfindungsgemässen Busses mit angebrachten Elementen des Dämmsystems;
- Fig. 2: eine geschnittene Ansicht des Aufbaus in einem hinteren Bereich des Busses;
- Fig. 3: eine Aussenansicht des Hecks, mit eingesetzten Fenstern;
- Fig. 4: eine Detailansicht des Übergangs zwischen Mittelgurt und Seitenfenster; und
- Fig. 5: eine Detailansicht eines Ladeanschlusses.

Grundsätzlich sind in den Figuren gleiche Teile mit gleichen Bezugszeichen versehen.

### Wege zur Ausführung der Erfindung

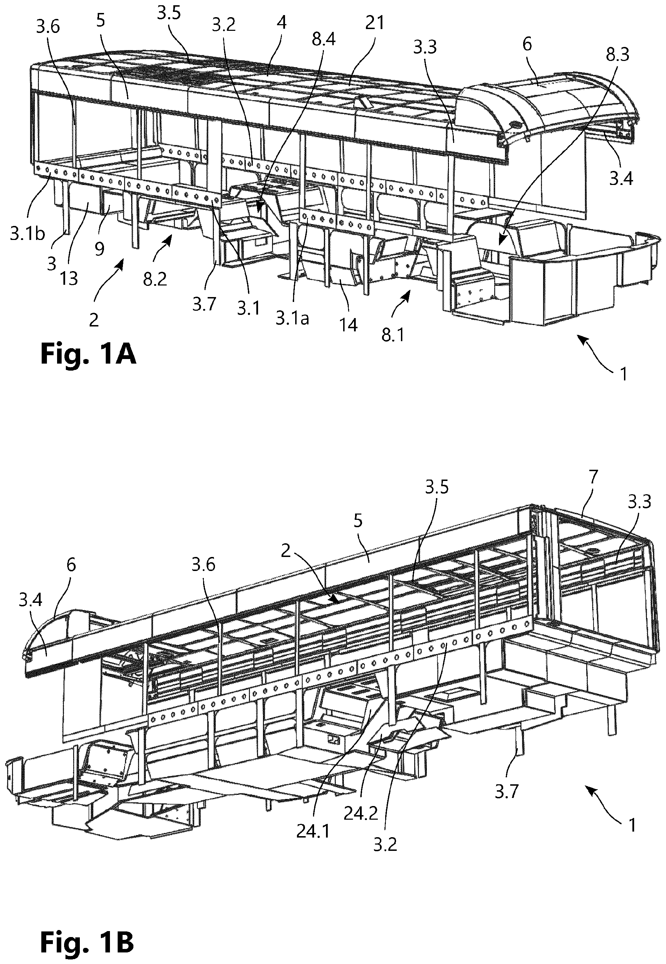

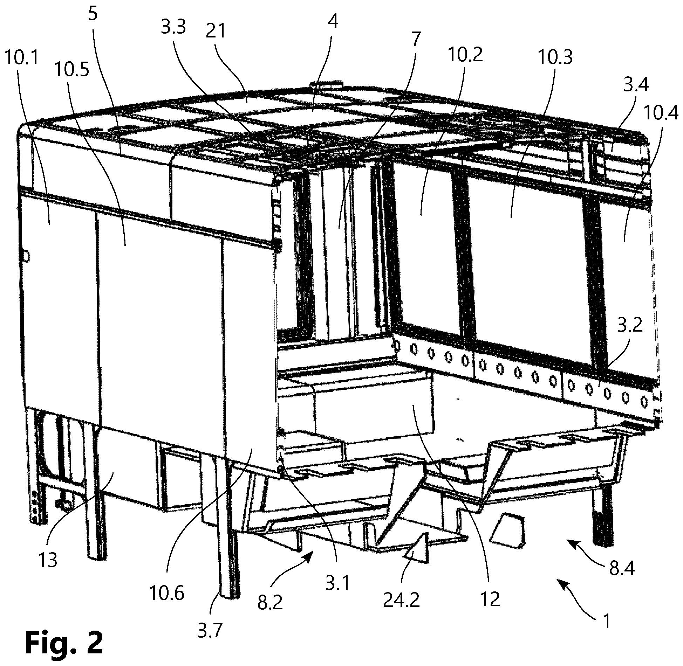

Die Figuren 1A, 1B sind zwei Schrägbilder der metallischen Fachwerkstruktur des Aufbaus eines erfindungsgemässen Busses mit angebrachten Elementen des Dämmsystems. Die Figur 1A zeigt eine Ansicht von schräg vorne rechts, während die Figur 1B eine Ansicht von hinten links unten zeigt. Die Figur 2 zeigt eine geschnittene Ansicht des Aufbaus in einem hinteren Bereich des Busses.

Der Aufbau 1 des hier gezeigten Solobusses mit einer Länge von 10.7 m basiert auf einer selbsttragenden Fachwerkstruktur 2 aus Aluminiumprofilen 3. Diese sind gemäss dem System CO-BOLT^{®} der Anmelderin ausgeführt. Sie weisen C-förmige Kanäle mit einer vorgegebenen Geometrie auf, die eine Schraubverbindung mehrerer Profile mithilfe von Eckstücken und Klemmplatten ermöglichen. Die Fachwerkstruktur 2 umfasst zwei horizontal seitlich verlaufende Mittelgurte 3.1, 3.2, wobei der Mittelgurt 3.1 auf der rechten Fahrzeugseite im Bereich einer Türöffnung unterbrochen ist, so dass ein vorderer Abschnitt 3.1a und ein hinterer Abschnitt 3.1b gebildet werden. Die Fachwerkstruktur umfasst weiter einen Dachrahmen 4 mit seitlichen, horizontal parallel oberhalb der Mittelgurte 3.1, 3.2 verlaufenden Längsprofilen 3.3, 3.4 und Dachprofilen 3.5, die eine Gitterstruktur bilden, die die beiden Längsprofile 3.3, 3.4 verbindet. Zwischen den Mittelgurten 3.1, 3.2 und dem jeweiligen Längsprofil 3.3, 3.4 des Dachrahmens 4 verlaufen vertikale obere Seitenprofile 3.6, in deren Verlängerung, ausgehend vom Mittelgurt 3.1, 3.2 nach unten untere Seitenprofile 3.7.

Der Aufbau 1 umfasst weiter verschiedene flächige Verkleidungselemente 5, die hier nur teilweise dargestellt sind. Sie haben keine tragende Funktion und können deshalb mit geringer Wandstärke ausgeführt und einfach an der Fachwerkstruktur 2 befestigt werden. Wo Verkleidungselemente 5 für die Dämmstruktur der dargestellten Ausführungsform relevant sind, werden sie weiter unten näher beschrieben. Am vorderen Ende des Dachrahmens 4 ist eine Dachhaube 6 angeordnet, die nach unten, zum Innenraum des Aufbaus 1 hin, offen ist und so die lichte Höhe im vordersten Bereich vergrössert. Im Heckbereich ist ferner ein Heckrahmen 7 angeordnet. Sowohl bei der Dachhaube 6 als auch beim Heckrahmen 7 handelt es sich um glasfaserverstärkte Polyesterformteile.

Der obere Teil der Carrosserie wird vollständig durch diese Profile gebildet und benötigt keine weitere Beplankung. Einfache Seitenklappen, welche bei Beschädigung rasch ersetzt werden können, decken die ganze Länge des unteren Teils der Carrosserie ab. Front und Heck werden aus glasfaserverstärkten Polyesterformteilen gebildet

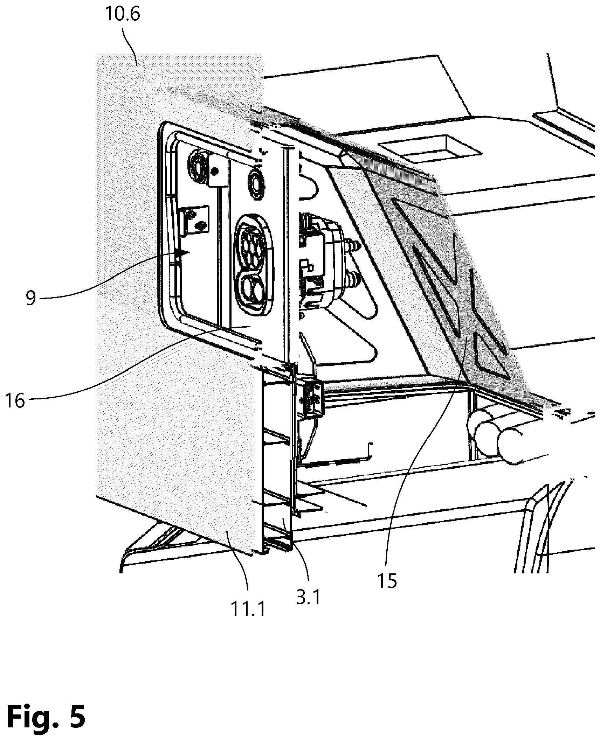

Weiter ersichtlich in den Figuren 1A, 1B sind unter anderem die Radkasten 8.1, 8.2, 8.3, 8.4 und eine Aussparung 9 auf der rechten Fahrzeugseite, hinter dem hinteren Radkasten 8.2, für einen Ladeanschluss. Dieser wird weiter unten, im Zusammenhang mit der Figur 5 näher beschrieben.

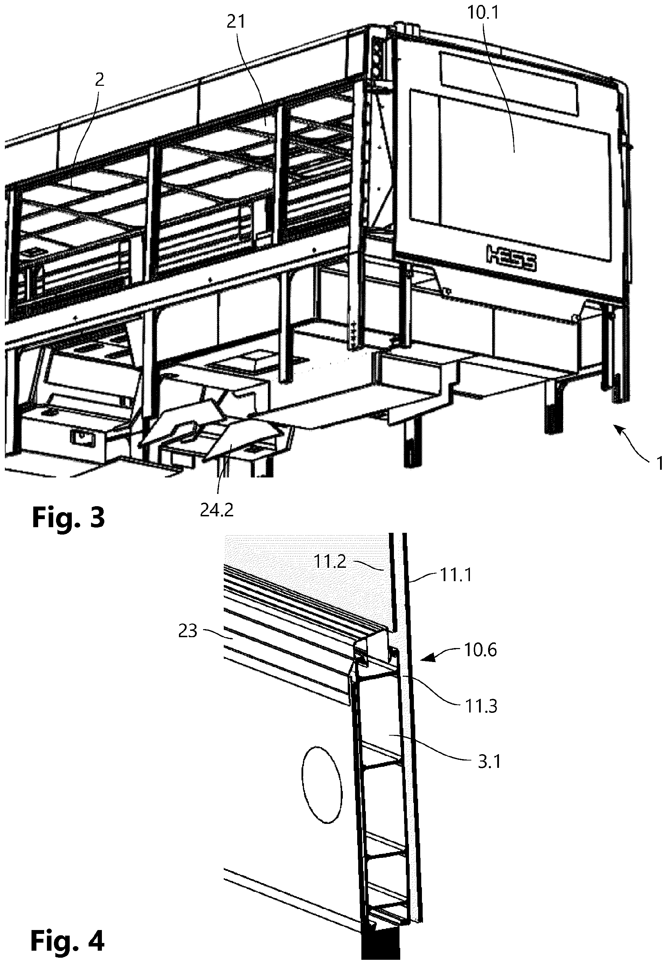

Die Figur 3 zeigt eine Aussenansicht des Hecks des Aufbaus 1, mit eingesetzten Fenstern. In der Figur sichtbar sind zum einen das Heckfenster 10.1, zum anderen mehrere Seitenfenster 10.2, 10.3, 10.4 auf der linken Fahrzeugseite, angrenzend an das Fahrzeugheck und Seitenfenster 10.5, 10.6 auf der rechten Fahrzeugseite, angrenzend an das Fahrzeugheck. Die Fenster sind mit der tragenden Fachwerkstruktur 2 des Aufbaus 1 verklebt.

Die Figur 3 zeigt eine Detailansicht des Übergangs zwischen Mittelgurt und Seitenfenster. Aus dieser Figur ist auch die Konstruktion der Seitenfenster gut ersichtlich. Das dargestellte Seitenfenster 10.6 umfasst eine äussere Scheibe 11.1 und eine innere Scheibe 11.2. Diese sind - in an sich bekannter Art - entlang des Randes der inneren Scheibe 11.2 mit einem Randverbund 11.3 aneinander gehalten. Der Randverbund dichtet den Innenraum zwischen den beiden Scheiben 11.1, 11.2 gasdicht ab. Dieser Innenraum enthält eine Füllung aus Krypton. Auf der nach aussen gerichteten Seite der inneren Scheibe 11.2 ist zudem eine low-E-Beschichtung aufgebracht. Die äussere Scheibe 11.1 erstreckt sich in ihrem unteren Bereich über die Fläche der inneren Scheibe 11.2 und damit über den Randverbund 11.3 hinaus. Im entsprechenden Bereich ist die äussere Scheibe 11.1 mit einer opaken Beschichtung versehen und auf ihrer Innenseite dem Mittelgurt 3.1 verklebt.

Im Folgenden werden die Massnahmen zur thermischen Dämmung beschrieben, die beim dargestellten Ausführungsbeispiel getroffen wurden.

Auf die Aluminiumprofile 3 der Fachwerkstruktur 2 ist bereichsweise auf der dem Innenraum des Aufbaus 1 zugewandten Seite bzw. auf einer Seite, die der umschlossenen Öffnung in der Fachwerkstruktur 2 zugewandt ist, eine 3 mm dicke Schicht aus Synthesekautschuk aufgeklebt. Damit werden Kältebrücken zwischen der Aussenseite und der Innenseite des Aufbaus 1 unterbrochen.

Die Kautschukschicht ist insbesondere auf die den Öffnungen zwischen den des Dachrahmens 4 zugewandten Seitenflächen der Dachprofile 3.5 aufgebracht. Diese Öffnungen wiederum sind mit Isolationselementen 21 versehen, die eine äussere (obere) Schicht aus 10 mm geschäumtem Silikat-Aerogel auf einem Polyurethan-Träger und eine innere (untere) Schicht aus 30 mm offenzelligem Melaminschaum umfassen. Ähnlicherweise ist auch die Innenseite der Dachhaube 6 mit einer Isolation aus einer äusseren (oberen) Schicht aus 10 mm geschäumtem Silikat-Aerogel auf einem Polyurethan-Träger und einer inneren (unteren) Schicht aus 40 mm offenzelligem Melaminschaum ausgekleidet.

Auf die Längsprofile 3.3, 3.4 des Dachrahmens 4 ist aussen im Wesentlichen ganzflächig eine Dämmung aus einer 5 mm dicken Silikat-Aerogelschicht aufgebracht, ebenso auf die Innenseite der Längsprofile 3.3, 3.4 in einem unteren Anschlussbereich und auf die Innenseite der vertikalen oberen Seitenprofile 3.6 sowie auf Seitenplatten im Höhenbereich der Fenster. Die vertikalen unteren Seitenprofile 3.7 sind auf ihrer Aussenseite mit einer Schicht aus 10 mm geschäumtem Silikat-Aerogel belegt.

Der Heckbereich, einschliesslich Heckrahmen 7 und Podest 12, ist innen und aussen je mit einer Schicht von 20 mm geschäumtem Silikat-Aerogel auf einem Polyurethan-Träger belegt. Die Wand 13 seitlich des Podests 12 ist wie andere Seitenwandelemente, z. B. die Wand 14 im Bereich des vorderen Wagenteils, aussen mit einer Schicht von 30 mm des geschäumten Silikat-Aerogels auf dem Polyurethan-Träger belegt.

Auf der Innenseite der Mittelgurte 3.1, 3.2 ist ganzflächig eine 2 mm dicke Aerogelschicht 22 aufgeklebt. Diese wird im Bereich ihres oberen Randes von einem Verkleidungsprofil 23 übergriffen. Dieses grenzt auf seiner Aussenseite an die Innenscheibe 11.2 des Seitenfensters 10.6 (vgl. Figur 4). In analoger Weise ist auch im oberen Bereich der Seitenfenster ein Verkleidungsprofil angeordnet: Es übergreift mit seinem inneren, oberen Schenkel den unteren Anschlussbereich des entsprechenden Längsprofils mit der darauf angeordneten Silikat-Aerogelschicht und verläuft mit seinem äusseren, unteren Schenkel parallel zum oberen Rand der Innenscheibe.

Die Radkasten 8.1...4 sind in einem oberen Bereich auf ihrer äusseren, dem Rad zugewandten Seite in einem oberen Bereich mit einer 20 mm dicken Schicht 24.1 aus Aerogel ausgekleidet, und in einem unteren Bereich mit einer 10 mm dicken Schicht 24.2 (vgl. Figur 1B). Eine (hier nicht dargestellte) Edelstahlabdeckung ist auf diesen Schichten angeordnet und schützt diese vor mechanischen Einflüssen.

Im Bereich der Front des Aufbaus 1 sind die Frontschürze und Seitenwandflächen innen mit einer 10 mm dicken Aerogelschicht ausgekleidet.

Weitere Dämmmassnahmen betreffen den Boden. Dieser umfasst eine 17 mm dicke, Platte aus einem Verbundwerkstoff mit einem geschlossenzelligen Polyurethanschaum und einem eingebetteten Glasfasergeflecht. Auf dieser Platte ist ein Bodenbelag mit einer Dicke von ca. 6 mm verklebt, der auf einem Glasfasergeflecht als Tragschicht basiert. Auf der Oberseite der Tragschicht sind eine Dekor- und Nutzschicht angeordnet, auf der Rückseite ein Gegenzug und eine 4 mm dicke geschäumte Schicht zur Schall- und Wärmedämmung.

Die Figur 5 ist eine Detailansicht eines Ladeanschlusses. Dieser ist durch die erwähnte Aussparung 9 in der rechten Seitenwand des Aufbaus 1 zugänglich. Die Aussparung befindet sich zum einen in der äusseren Scheibe 11.1 des Seitenfensters 10.6 und zum anderen im Mittelgurt 3.1. Nach hinten ist der hinter der Aussparung 9 gebildete Aufnahmeraum durch eine Rückwand 15 aus Stahlblech abgeschlossen. Im Aufnahmeraum ist eine Ladesteckdose 16 platziert, deren Anschluss von aussen durch die Aussparung 9 zugänglich ist.

Mit den beschriebenen Massnahmen lässt sich für den Aufbau ein Wärmedurchgangskoeffizient (U-Wert) von unter 2 W/m² K erreichen. Dies ist deutlich tiefer als bei standardmässig gedämmten Busaufbauten, die in der Regel einen U-Wert von ca. 3 W /m² K aufweisen.

Die Erfindung ist nicht auf das dargestellte Ausführungsbeispiel beschränkt. So lassen sich im Rahmen der Erfindung mehrere der beschriebenen Massnahmen zur Dämmung auf andere Weise kombinieren. Wie oben erwähnt, kann das Fahrzeug bei den Türen Vorrichtungen zur Erzeugung eines Luftschleiers aufweisen. Die Geometrie und Anordnung der Dämmungselemente lässt sich ebenfalls variieren.

Zusammenfassend ist festzustellen, dass die Erfindung einen Bus zur Beförderung von Passagieren schafft, der eine verbesserte Wärmedämmung aufweist und gleichzeitig wirtschaftlich und energiesparend ist.

## Patentansprüche

1. Bus zur Beförderung von Passagieren, umfassend einen Aufbau, der einen Fahrgastraum umgibt, wobei der Aufbau eine metallische Fachwerkstruktur und daran befestigte Flächenelemente umfasst und wobei der Fahrgastraum von einem Aussenraum durch ein an der metallischen Fachwerkstruktur angeordnetes Dämmsystem thermisch isoliert ist, das Dämmsystem umfassend:
c) an der metallischen Fachwerkstruktur gelagerte mehrfachverglaste Seitenfenster als erste Flächenelemente;
d) an der metallischen Fachwerkstruktur gelagerte zweite Flächenelemente, die zumindest auf einer Hauptfläche mit einer ersten Isolationsschicht aus einem melaminbasierten Schaumstoffmaterial und mit einer zweiten Isolationsschicht aus einem Aerogelmaterial versehen sind.

2. Bus nach Anspruch 1, **dadurch gekennzeichnet, dass** die erste Isolationsschicht eine erste Dicke von 20-50 mm aufweist und dass die zweite Isolationsschicht eine zweite Dicke von 5-20 mm aufweist, wobei insbesondere die erste Dicke mindestens doppelt so gross ist wie die zweite Dicke.

3. Bus nach Anspruch 1 oder 2, **dadurch gekennzeichnet, dass** die Seitenfenster eine Edelgasfüllung aufweisen und mit einer low-E-Beschichtung versehen sind.

4. Bus nach einem der Ansprüche 1 bis 3, **dadurch gekennzeichnet, dass** mindestens 20% einer äusseren Oberfläche des Aufbaus mit einer Verglasung versehen sind.

5. Bus nach einem der Ansprüche 1 bis 4, **dadurch gekennzeichnet, dass** die Seitenfenster eine äussere Scheibe umfassen und mindestens eine mit der äusseren Scheibe mechanisch und dichtend verbundene innere Scheibe, wobei eine Fläche der äusseren Scheibe grösser ist als eine Fläche der inneren Scheibe.

6. Bus nach Anspruch 5, **dadurch gekennzeichnet, dass** sich in einem unteren Bereich der Seitenfenster die äussere Scheibe über die mindestens eine innere Scheibe nach unten erstreckt und dass eine Innenseite der äusseren Scheibe mit einer Aussenfläche eines sich im Wesentlichen horizontal erstreckenden Mittelgurts der metallischen Fachwerkstruktur verklebt ist.

7. Bus nach Anspruch 6, **dadurch gekennzeichnet, dass** eine dem Fahrgastraum zugewandte Innenseite des Mittelgurts mit einer Schicht aus einem Aerogelmaterial versehen ist und dass ein Verkleidungsprofil am Mittelgurt mechanisch befestigt ist, so dass das Verkleidungsprofil die Schicht teilweise übergreift und auf einer Aussenseite flächig an die innere Scheibe mindestens eines der Seitenfenster anstösst.

8. Bus nach einem der Ansprüche 1 bis 7, **dadurch gekennzeichnet, dass** an der metallischen Fachwerkstruktur zumindest bereichsweise auf einer dem Fahrgastraum zugewandten Seite und/oder auf einer einer durch die Fachwerkstruktur gebildeten Öffnung zugewandten Seite eine Schicht eines Isolationsmaterials, insbesondere eines Kautschukmaterials, angeordnet ist.

9. Bus nach einem der Ansprüche 1 bis 8, wobei der Aufbau einen Boden umfasst, der eine Grundplatte aus einem Verbundprodukt aus vernetztem Polymerschaum und Glasfasern sowie einen innenseitig aufgebrachten Bodenbelag umfasst.

10. Bus nach einem der Ansprüche 1 bis 9, **dadurch gekennzeichnet, dass** der Aufbau ein Dach umfasst, das in Öffnungen der metallischen Fachwerkstruktur zweite Flächenelemente aufweist.

11. Bus nach einem der Ansprüche 1 bis 10, **dadurch gekennzeichnet, dass** der Aufbau im Bereich von Radkästen eine Schicht aus einem Aerogelmaterial aufweist.

12. Bus nach Anspruch 11, **dadurch gekennzeichnet, dass** die Schicht aus dem Aerogelmaterial auf einer dem Fahrgastraum abgewandten Aussenseite des Aufbaus angeordnet ist und dass eine mechanische Schutzschicht aussen auf der Isolationsschicht angeordnet ist.

13. Bus nach einem der Ansprüche 1 bis 12, **dadurch gekennzeichnet, dass** mindestens eine Tür des Busses mit einer Vorrichtung zur Erzeugung eines Luftschleiers versehen ist.

14. Bus nach einem der Ansprüche 1 bis 13, **dadurch gekennzeichnet, dass** der Bus einen elektrischen Antrieb und eine Antriebsbatterie umfasst, wobei ein Ladeanschluss zum Aufladen der Antriebsbatterie im Bereich der Seitenfenster derart angeordnet ist, dass er durch einen Ausschnitt in einem der Seitenfenster von aussen zugänglich ist.
